# EUROPÄISCHE PATENTANMELDUNG

(11) **EP 1 757 356 A1**
(43) Veröffentlichungstag der Anmeldung: **28.02.2007**
(21) Anmeldenummer: 05018567.7
(22) Anmeldetag: 26.08.2005
(51) Int. Cl.: B01D 65/08, F04B 43/12, C12H 1/06

(54) **Filtervorrichtung mit Pumpeneinrichtung**

(71) Anmelder: KRONES AG, 93073 Neutraubling (DE)
(72) Erfinder: KAMMERLOHER, Helmut, D-85354 Freising (DE)
(74) Vertreter: Grünecker, Kinkeldey, Stockmair & Schwanhäusser Anwaltssozietät

(57) **Zusammenfassung**

Die Erfindung betrifft eine Filtervorrichtung mit einem Crossflow-Filtermodul insbesondere zur Filtration von mit Proteinen, Polysacchariden und/oder Gärungsmikroorganismen, wie z. B. Hefe, geladenen Flüssigkeiten mit einem Gehäuse 7, das ein Unfiltratzulauf 2, ein Unfiltratablauf 3 sowie einen Filtratablauf 4 aufweist, wobei in dem Gehäuse mindestens eine Crossflow-Membranfilterkerze angeordnet ist, die mindestens einen Kanal 11 aufweist, durch den das Unfiltrat U strömt, wobei das Filtrat F quer zum Unfiltratstrom durch die Membranfilterkerze abgezogen wird ein entsprechendes Verfahren. Um die Standzeit einer solcher Filtervorrichtung zu verlängem und insbesondere das Verblocken der Membranfilterkerzen zu verhindern wird während der Filtration zeitweise das von den Crossflow-Membranfilterkerzen erzeugte Filtrat entgegen der Flussrichtung des Filtrats zurückgepumpt, wobei eine Pumpeneinrichtung angeordnet ist, die derart ausgebildet ist, dass sie während der Filtration zeitweise Filtrat entgegen der Flussrichtung rückpumpt und zeitweise den Filtratfluss nicht blockiert.

## Beschreibung

Die Erfindung betrifft eine Filtervorrichtung sowie ein Verfahren insbesondere zur Filtration von mit Proteinen, Polysacchariden und/oder Gärungsmikroorganismen wie z. B. Hefen, beladenen Flüssigkeiten gemäß den Oberbegriffen der Ansprüche 1 und 7.

Der Einsatz von Kieselgur zur Bierklärung wird heute zunehmend als problematisch betrachtet. Aufgrund der Entsorgungsproblemabk von Kieselgur sowie der Toxizität von Kieselgurstaub wird nach Alternativen zur herkömmlichen Bierfiltration mit Anschwemmfiltem gesucht. Im Bereich der Lebensmitteltechnologie wird auch für andere mit Proteinen und Polysacchariden beladenen Flüssigkeiten nach geeigneten Filtrationsmöglichkeiten gesucht. Eine mögliche Lösung ist das sogenannte Crossflow-Mikrofiltrationsverfahren, bei dem beispielsweise Unfiltrat durch eine Membranfilterkerze geleitet wird. Das Unfiltrat durchströmt die Filterkerze in Längsrichtung, wobei quer zum Unfiltratstrom das Unfiltrat durch die Membranfilterkerze permeiert. Die Filterkerzen können dabei Kunststoffmembranfilterkerzen, Keramikmembranfilterkerzen oder aber Metallsinterfilterkerzen sein. Zur Steigung der Filtrationsleistung können Membranfilterkerzen in einem Modul mit Filterflächen von 10 m² und mehr zusammengefasst werden.

Die Hauptschwierigkeit beim Betrieb von derartigen Filteranlagen ist die Reinigungsproblematik und die damit verbundene kurze Standzeit der Anlage. Insbesondere bei der Filtration von mit Proteinen oder Polysacchariden beladenen Flüssigkeiten (z.B. Bier, Säfte, Wein) bildet sich auf der Membranoberfläche eine Deckschicht aus, die mit Hilfe der Überströmung abgetragen und somit durch die Strömungsform kontrolliert wird. Durch die obengenannten Inhaltsstoffe in Bier, Säften oder Wein (Proteine oder das für Bier typische β-Glukan) kommt es zu einer Verstopfung bzw. Verblockung der Kanäle der Filterkerze, wodurch der Fluss durch die Filterkerze sinkt. Um den Membranfluss in einem optimalen Bereich, auf jeden Fall aber über einem minimalen Wert zu halten, muss die Membranfilterkerze in wiederkehrenden Zyklen gereinigt werden. Hierzu kommen die unterschiedlichsten Verfahren zum Einsatz. Die angewendeten Verfahren reichen von Rückspülen, Richtungswechsel des Flusses bis hin zur Komplettreinigung der Anlage einschließlich der Membrane mit Säure, Laugen und speziellen Additiven. Gerade aber Kunststoffmembrane werden durch aggressive Reinigungsmittel bleibend geschädigt. Es tritt eine Versprödung des Materials auf, welche die Membranlebenszeit erheblich verkürzt, wobei insbesondere Membranbrüche durch die Wechselbelastung des Rückspülens begünstigt werden. Somit sinkt die Standzeit der Anlage. Der Reinigung ist darüber hinaus bei Kunststoffmembranen materialbedingt ein Temperaturmaximum von ca. 50 bis bestenfalls 80° gesetzt, welches optimale Heißreinigung durch Lauge verhindert. Ebenso existieren Limits von maximaler Druckbelastung (in der Regel zwischen 10 und 20 bar). Weitere Ansätze zur Lösung der Reinigungsproblematik sind neben der Rückspültechnik und Reinigungsmitteln Enzymeinsatz sowie Ultraschall. Jedoch ist der Enzymeinsatz zur Fällung der Hauptkomponenten, welche die Verblockung verursachen, zur Herstellung von Bier durch das Reinheitsgebot verboten und auch der Einsatz von Ultraschall führt teilweise zu einer Verblockung der Filterkerzen.

Hiervon ausgehend liegt der vorliegenden Erfindung die Aufgabe zugrunde, eine Filtervorrichtung, bzw. ein Verfahren insbesondere zur Filtration von mit Proteinen oder Polysacchariden beladenen Flüssigkeiten bereitzustellen, die eine erhöhte Standzeit des Moduls bzw. der Membranfilterkerzen ermöglichen.

Erfindungsgemäß wird diese Aufgabe durch die Merkmale der Ansprüche 1 und 7 gelöst.

Gemäß der vorliegenden Erfindung wird während der Filtration zeitweise Filtrat entgegen der Flussrichtung des Filtrats rückgepumpt, d. h. rückgeschoben, so dass sich die Deckschicht, die sich in den Kanälen der Membranfilterkerzen ausbildet abgetragen wird oder erst gar nicht entstehen kann. Somit kann der Verblockung der Membrane bereits bei der Entstehung wirksam entgegengewirkt werden. Dies geschieht durch eine Pumpeneinrichtung in der Filtratableitung, die mit dem Filtratablauf des Moduls verbunden ist, wobei die Pumpeneinrichtung derart ausgebildet ist, dass sie einerseits das Filtrat entgegen der Flussrichtung zurückpumpen kann aber andererseits auch zeitweise den Filtratfluss nicht blockiert, so dass das Filtrat in seiner Filtratabflussrichtung ungehindert durch die Pumpeneinrichtung z.B. zu einem Filtratpuffertank fließen kann. Vorteilhafterweise wird in Ruhestellung der Pumpeneinrichtung, d.h. wenn die Pumpe nicht läuft der Filtratfluss nicht blockiert, so dass das Filtrat in effektiver Weise abfließen kann.

Gemäß einer bevorzugten Ausführungsform ist die Pumpeneinrichtung, z. B. eine Schlauchpumpe oder Zahnradpumpe, deren Laufrichtung der Flussrichtung des Filtrats entgegengesetzt ist. Eine solche Pumpe ist kostengünstig und erfüllt auf einfache Art und Weise die Bedingung, dass die Pumpe sowohl Filtrat rückpumpen kann aber auch einfach Filtrat in Flussrichtung des Filtrats also entgegen der Laufrichtung der Pumpe durchfließen lassen kann. (Die Pumpe kann auch bei Bedarf in Flussrichtung des Filtrats fördem). Dazu ist die Schlauchpumpe insbesondere so ausgebildet, dass sie einen z.B. im Wesentlichen U-förmig geführten Schlauch umfasst, sowie einen umlaufenden Gleitschuh, der bei seiner Rotation in einem ersten Winkelbereich den U-förmig geführten Schlauch zusammendrückt, und so das Unfiltrat entgegen der Filtratflussrichtung fördert und in einem zweiten Winkelbereich den Schlauch nicht zusammendrückt, so dass das Filtrat ungehindert durch die Schlauchpumpe fließen kann.

Wenn mehrere Crossflow-Filtermodule oder auch Moduleinheiten hintereinander in Reihe angeordnet sind, ist jedem Crossflow-Filtermodul oder jeder Moduleinheit in seiner entsprechenden Filtratableitung eine eigene Pumpenvorrichtung zugeordnet. Somit kann die Pumpleistung individuell an die Anforderungen des entsprechenden Moduls oder der Moduleinheiten angepasst werden.

In vorteilhafter Weise kann die Schlauchpumpe kontinuierlich bei geringer Drehzahl (z.B. von 1 bis 10 Hz) mit Pauseintervallen dazwischen (z.B. 5 bis 60 s) angetrieben werden. Somit kann bei der Filtration auf einfache Art und Weise eine Verblockung verhindert werden. Die Schlauchpumpe kann auch kurzzeitig mit hoher Drehzahl (5 bis 150 Hz) arbeiten um so bereits bestehende Verblockungen zu lösen. Es ist dabei darauf zu achten, dass insgesamt beim kontinuierlichen Betrieb der Pumpeneinrichtung die rückgepumpte Menge an Filtrat kleiner ist als die Filtratmenge, die in Flussrichtung durch die Pumpeinrichtung fließt, so dass ausreichend Filtrat abgeführt werden kann.

Die Erfindung wird nachfolgend unter Bezugnahme der begleitenden Zeichnungen näher erläutert werden.
- Fig. 1: zeigt einen Schnitt durch eine Pumpeneinrichtung gemäß der vorliegenden Erfindung.
- Fig. 2: zeigt einen Schnitt durch ein Crossflow-Filtermodul mit einer Crossflow-Membranfilterkerze.
- Fig. 3: zeigt einen Schnitt entlang der Linie |-| in Fig. 2.
- Fig. 4: zeigt eine perspektivische Darstellung einer Crossflow-Membranfilterkerze.
- Fig. 5: zeigt eine Vorderansicht eines Crossflow-Filtermoduls mit mehreren Crossflow-Membranfilterkerzen
- Fig. 6: zeigt eine perspektivische Darstellung des in Fig. 5 gezeigten Filtermoduls.
- Fig. 7: zeigt in schematischer Darstellung eine Filtervorrichtung mit mehreren Crossflow-Filtermodulen.
- Fig. 8: zeigt schematisch den Einsatz der erfindungsgemäßen Filtervorrichtung als Bierfilter.
- Fig. 9: zeigt stark vereinfacht die Drehzahl der Pumpeneinrichtung in Abhängigkeit der Zeit.
- Fig. 10a: zeigt in vereinfachter Form den Filtratfluss in Abhängigkeit des Drehwinkels des Gleitschuhs.
- Fig. 10b: zeigt in stark vereinfachter Weise die Menge an rückgepumpten Filtrat in Abhängigkeit des Drehwinkels des Gleitschuhs der Pumpeneinrichtung.
- Fig. 11: zeigt schematisch eine Ausführungsform der Erfindung.

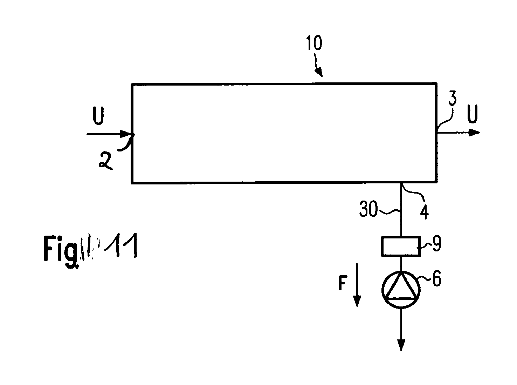

Fig. 11 zeigt schematisch den Aufbau einer erfindungsgemäßen Filtervorrichtung. Wie aus Fig. 11 hervorgeht, umfasst hier die erfindungsgemäße Filtervorrichtung ein Crossflow-Membranfiltermodul 10, sowie eine Pumpeneinrichtung 6 in einer Filtratableitung 30, die von dem Crossflow-Filtermodul 10 beispielsweise zu einem Filtratpuffertank (in Fig. 11 nicht gezeigt) führt. Vor der Pumpeneinrichtung 6 ist ein Drucksensor 9 angeordnet.

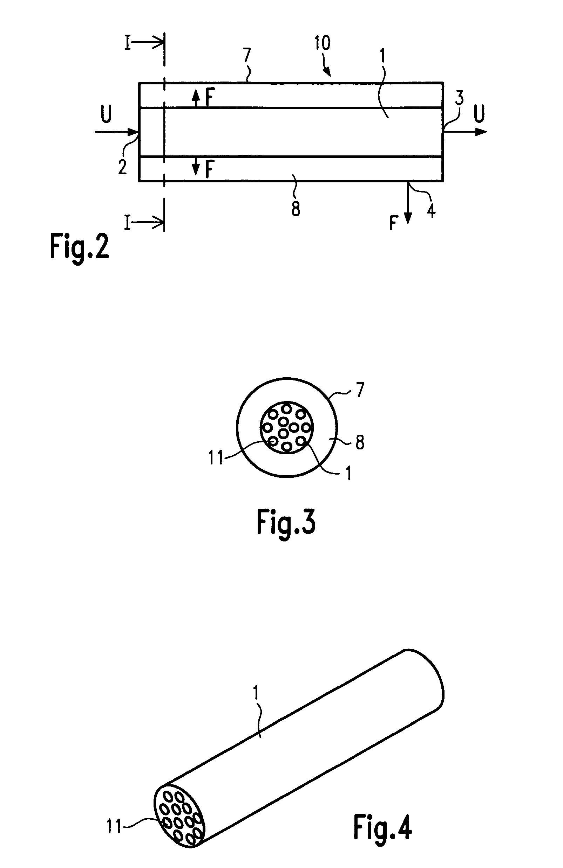

Bei dem Filtermodul 10 handelt es sich um Crossflow-Membranfiltermodul, das mindestens eine Membranfilterkerze 1 umfasst. Fig. 2 bis 4 zeigen schematisch ein derartiges Filtermodul 10 und dessen Funktionsweise mit nur einer Membranfilterkerze 1. Das Filtermodul 10 weist hier ein Druckgehäuse 7 auf, das eine Membranfilterkerze 1 umfasst, die im Crossflow von Unfiltrat U, d.h. hier von ungefiltertem Bier durchströmt wird. Zwischen der Membranfilterkerze 1 und dem Druckgehäuse 7 bildet sich ein Filtratraum 8 aus. Die Multimembranfilterkerze 1 weist wie in Fig. 3 und 4 näher dargestellt ist mehrere Kanäle 11 auf, die sich in Längsrichtung durch die Filterkerze 1 erstrecken. Der Kanaldurchmesser liegt in einem Bereich von etwa 0,5 bis 10 mm, wenn die Filterkerze aus Kunststoff ausgebildet ist, beispielsweise aus Polysulfon, Polysulfonamiden, Polyurethan oder vergleichbaren Polymeren. Der Durchmesser der Filterkerze liegt in einem Bereich von etwas mehr als 0,5 bis 2 mm bei Kunststoff und etwa 10 bis 60 mm bei Keramik. Die Filterkerze kann jedoch auch aus keramischem Material wie beispielsweise Al₂O₃ ausgebildet sein. Auf der Röhreninnenseite kann darüber hinaus eine wenige Mikrometer starke Membranschicht, z.B. aus Al₂O₃, ZrO₂, TiO₂ angeordnet sein. Die Porengröße zur Filtration beträgt bei der Bierfiltration beispielsweise 0,2 bis 0,8 µm. Die Filterkerzenlänge liegt in einem Bereich von etwa 0,5 bis 3 m. Bei der Filtration tritt Unfiltrat in die Kanäle 11 der Filterkerze 1 durch den Unfiltrateinlass 2 ein, tritt quer durch die Filterkerze und verlässt die Oberfläche der Filterkerze 1 als Filtrat und tritt in den Filtratraum 8 wo das Filtrat F über den Filtratauslass 4 abgezogen werden kann, d.h. über eine Filtratableitung 30, z.B. zu einem Filtratpuffertank läuft. Die Flussrichtung des Filtrats, das aus dem Filtratablauf beispielsweise zu einem Puffertank läuft wird nachfolgend als Filtratflussrichtung bezeichnet. Das Unfiltrat U, das durch die Kanäle 11 fließt verlässt das Modul 10 an seinem Unfiltratauslass 3.

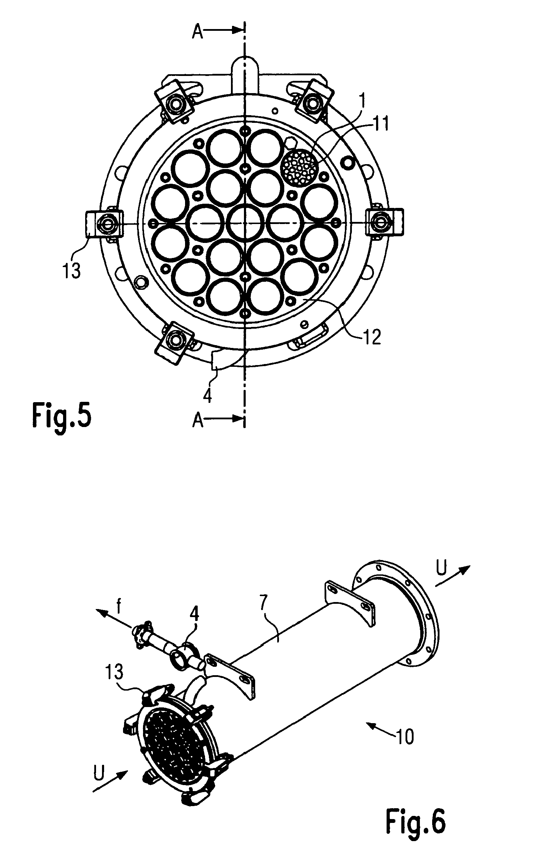

Gemäß einer bevorzugten Ausführungsform umfasst das Crossflow-Filtermodul 10 jedoch mehrere Membranfilterkerzen 1, wie aus Fig. 5 und 6 hervorgeht. Der Aufbau einer solchen Anordnung entspricht im Wesentlichen dem Aufbau, wie er im Zusammenhang mit den Fig. 2 bis 4 beschrieben wurde, mit der Ausnahme, dass im Druckbehälter 7 mehrere Multitubemembranfilterkerzen, z.B. 7 bis 19 Stück parallel zueinander angeordnet sind. In der Fig. 4 ist auf der Vorderseite eine Abdeckplatte zu erkennen, die über eine Befestigungseinrichtung 13 an den röhrförmigen Druckbehälter befestigt, hier angeflanscht ist. Über die Flansche 14 können die Module 10 mit entsprechenden Rohrleitungen oder anderen Modulen verbunden werden. Es können auch sogenannte Doppelmodule ausgebildet werden, bei denen zwei Moduleinheiten aneinander befestigt werden.

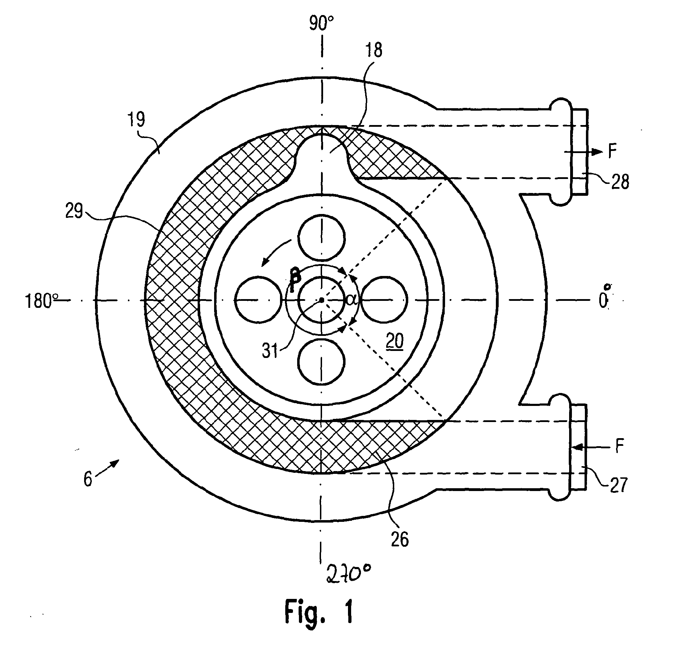

Fig. 1 zeigt die Pumpenvorrichtung 6 im Detail. Gemäß der vorliegenden Erfindung, ist eine Pumpenvorrichtung 6 in der Filtratablaufleitung 30 vorgesehen, die mit dem Filtratablauf 4 verbunden ist, wobei die Pumpeneinrichtung 6 derart ausgebildet ist, dass sie während der Filtration zeitweise Filtrat entgegen der Flussrichtung rückpumpt, d.h. in eine Richtung, die dem in Fig. 11 gezeigten Pfeil entgegengesetzt ist. Die Pumpeneinrichtung 6 ist so aufgebaut, dass sie zwar ihre Laufrichtung entgegen der Flussrichtung des Filtrats F aufweist, aber, dass sie auch zeitweise den Filtratfluss nicht blockiert, so dass das Filtrat F ungehindert durch Pumpeneinrichtung 6 in Filtratflussrichtung fließen kann.

Fig. 1 ist eine bevorzugte Ausführungsform einer solchen Pumpeneinrichtung 6. Die in Fig. 1 gezeigte Pumpeneinrichtung 6 ist als Schlauchpumpe 6 ausgebildet. Die Pumpe könnte jedoch z. B. auch eine Zahnradpumpe sein. Eine solche Schlauchpumpe, bzw. Peristaltikpumpe, ist eine Verdrängerpumpe, wobei das zu fördernde Medium hier das Filtrat aus dem Filtratauslass 4 durch einen hier U-förmig geführten Schlauch 26 geleitet wird. Das heißt, dass hier der Schlauch 26 eine Verlängerung der Filtratableitung 30 ist. Die Schlauchpumpe 6 weist weiter ein Gehäuse 19 auf. Die Schlauchpumpe 6 weist weiter einen Gleitschuh 18 auf, der sich hier zusammen mit einem Teller 20 um die Achse 31 dreht. Der Schlauch 26 stützt sich an der Innenseite 29 des Gehäuses ab. Der Schlauch 26 wird von innen durch den Gleitschuh 18 zusammengedrückt bzw. abgeklemmt. Bei Rotation des Gleitschuhs 18 bewegt sich dann die "Abklemmstelle" entlang des Schlauches 26 und treibt damit das Filtrat voran. Da die Laufrichtung (siehe Pfeil) der Schlauchpumpe 6 der Flussrichtung des Filtrats entgegengesetzt ist, fördert die Schlauchpumpe 6 das Filtrat zurück. Die Schlauchpumpe 6 weist hier nur einen Gleitschuh 18 auf. Bei der Rotation in dem Winkelbereich β, d.h. in dem ersten Winkelbereich drückt der Gleitschuh 18 bei seiner Bewegung wie zuvor beschrieben den Schlauch 26 zusammen. In dem Winkelbereich α, d.h. da wo kein Schlauch vorhanden ist, drückt der Gleitschuh 18 dementsprechend auch nicht auf den Schlauch 26, so dass wenn sich der Gleitschuh 18 in diesem Winkelbereich befindet das Filtrat F nicht entgegen Filtratflussrichtung bewegt, sondern das Filtrat F frei in Filtratflussrichtung durch den Schlauch 26 der Pumpe abfließen kann. Die Antriebswelle (nicht dargestellt) des Gleitschuhs 18 ist so initialisiert, dass in Ruhestellung der Pumpe, d.h. wenn sich der Gleitschuh nicht bewegt, sich der Gleitschuh 18 in dem Winkelbereich α befindet, d.h. in einer Position in der der Schlauch nicht zusammengedrückt wird, so dass das Filtrat ungehindert durch den Schlauch 26 fließen kann.

Das Volumen, das von der Schlauchpumpe während einer Drehung in Richtung Crossflow-Filtermodul 10 rückgepumpt wird beträgt etwa 0,08 bis ca. 3 I/Umdrehung, je nach Größe des Moduls.

Dadurch, dass während der Filtration Filtrat entgegen der Filtratflussrichtung rückgepumpt wird, können sich Deckschichtablagerungen in den dünnen Kanälen 11 der Membranfilterkerzen 1 lösen. Somit können bereits während der Filtration zu große Ablagerungen verhindert werden und so ein Verblocken der Membran verhindert werden. Somit kann die Standzeit der Crossflow-Filtermodule verlängert werden.

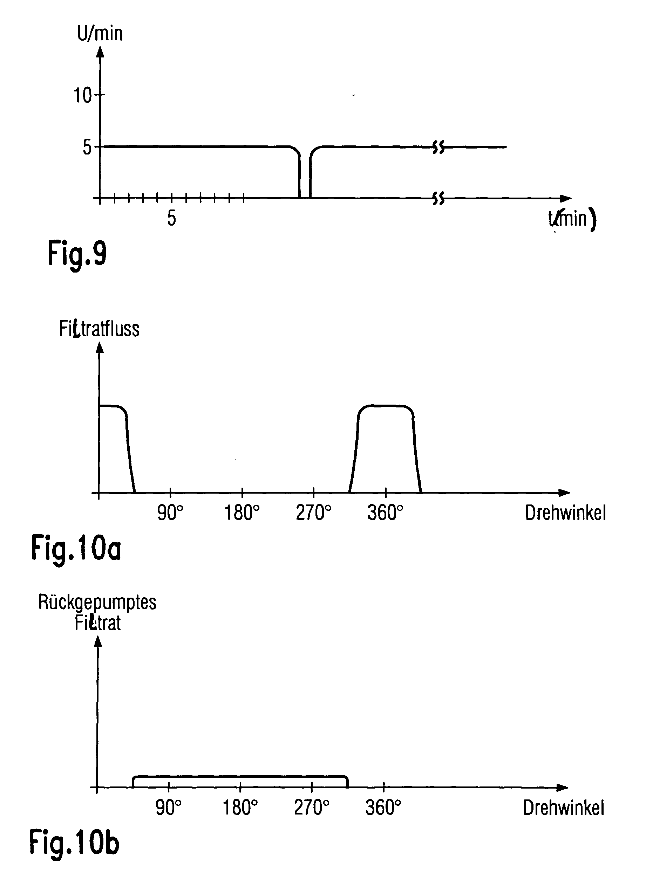

Das erfindungsgemäße Verfahren wird nachfolgend unter Bezugnahme der Fig. 1 sowie 9 und 10 näher erläutert. Bei der Filtration wird Unfiltrat in den Unfiltratzulauf 2 des Filtermoduls 10 gepumpt, durch die Membranfilterkerzen 1 gefiltert und verlässt über den Filtratablauf 4 das Modul 10. In der Filtratableitung 30 passiert das Filtrat den Drucksensor 9 und wird in die Filtrateingangsseite 27 der Schlauchpumpe 6 eingeleitet. Die Schlauchpumpe 6 kann bei geringer Drehzahl (z.B. 1 bis etwa 130 Hz) mit zusätzlichen Pausen (etwa 10 bis 60 s) kontinuierlich arbeiten wie aus Fig. 9 hervorgeht. Pausenintervalle können wie aus Fig. 9 hervorgeht notwendig sein, damit die rückgepumpte Menge an Filtrat kleiner ist als die Filtratmenge, die in Filtratflussrichtung durch die Pumpeneinrichtung 6 fließt, so dass eine effiziente Filtration möglich ist.

Wie aus Fig. 10a und 10b hervorgeht, kann, wenn sich der Schuh 18 in der in Fig. 1 dargestellten 0°-Position befindet das Filtrat F, das an der Filtrateingangsseite 27 der Pumpe 6 eintritt ungehindert durch den Schlauch 26 fließen kann, da dieser nicht durch den Schuh 18 abgeklemmt wird. Dreht sich der Schuh 18 in Pfeilrichtung, so beginnt er bei etwa 45° den Schlauch 26 abzudrücken, so dass der Filtratfluss in Filtratflussrichtung blockiert wird und wie aus Fig. 10a hervorgeht auf 0 absinkt. Dafür wird jedoch wie zuvor beschrieben in dem Winkelbereich β, d.h. in diesem Ausführungsbeispiel beispielsweise zwischen 45° und 315° so lange Filtrat entgegen Filtratflussrichtung gefördert bis der Schuh 18 wieder in den Winkelbereich α einläuft (Figur 10 b). Dadurch, dass die Schlauchpumpe 6 einen Arbeitsbereich aufweist, in dem das Filtrat nicht entgegen Filtratflussrichtung gepumpt wird sondern den Schlauch 26 frei durchströmen kann, kann die Pumpe mehr oder weniger kontinuierlich betrieben werden. Es sollte jedoch sichergestellt werden, dass in einem Drehzyklus der Pumpe die rückgepumpte Menge an Filtrat kleiner ist als die Filtratmenge die in Filtratflussrichtung durch die Pumpeneinrichtung fließt. Dass die Filtratabflussmenge in Filtratrichtung erhöht wird, kann auch durch Pausenintervalle, wie in Fig. 9 angedeutet, realisiert werden. Sollte sich in einem Modul bereits eine starke Deckschicht ausgebildet haben, so ist es auch möglich, dass die Schlauchpumpe kurzzeitig mit sehr hoher Drehzahl arbeitet (z.B. ca. > 100 Hz). Es werden dabei mehrere Umdrehungen (z.B. 5 bis 10) mit anschließenden Pausen (z.B. 5 bis 20 s) gefahren. Diese Beaufschlagung kann mehrere Male (z.B. zwei- bis achtmal) wiederholt werden.

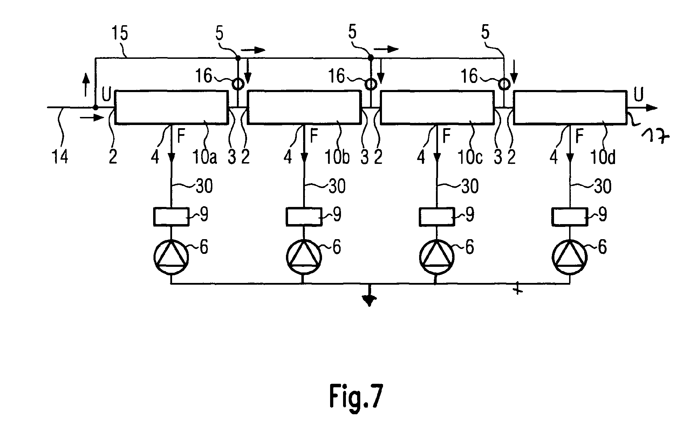

Die Fig. 7 zeigt ein bevorzugtes Ausführungsbeispiel gemäß der vorliegenden Erfindung. Hier sind mehrere Crossflow-Filtermodule 10a, b, c, d in Reihe geschaltet. Die Filtermodule 10 sind derart in Reihe geschaltet, dass Unfiltrat U aus dem Unfiltratauslass 3 eines Filtermoduls dem Unfiltrateinlass 2 des nachfolgenden Filtermoduls 1 zugeführt wird, wobei eine Bypassleitung 15 vorgesehen ist, die einen Teilstrom des Unfiltrats U vor dem Unfiltrateinlass 2 eines ersten Filtermoduls 10 an dem ersten Filtermodul 10 vorbeileitet und zumindest einem nachfolgenden Filtermodul 10 als Unfiltrat zuführt. Somit kann der Bypass dem Druckabfall der einzelnen Filtermodule entgegenwirken, ohne dass eine Regelung der Unfiltratflussmenge und Druckverhältnisse der einzelnen Filtermodule notwendig ist. Dies ermöglicht der geringere Druckabfall in der Bypassleitung. Das heißt, durch zusätzliches Zuführen von Unfiltrat über die Bypassleitung kann der Druckverlust in dem entsprechenden Modul kompensiert bzw. abgeschwächt werden. In der Abzweigleitung 5, die von der Bypassleitung 15 zu den Filtermodulen 10 führt können noch Einrichtungen 16 zum Einstellen der Flussmenge des Unfiltrats im nachfolgenden Filterelement 1 vorgesehen sein. (Beispielsweise Blenden, Klappen etc.). Nach dem letzten Filtermodul 10d kann eine Rückführleitung 17 vorgesehen sein (hier nicht dargestellt), die das Unfiltrat in einer Schleife wieder dem ersten Filtermodul der Crossflow-Membranfilteranlage zuführt, so dass ein Filterkreislauf realisiert wird. Wie aus Fig. 7 ersichtlich ist, weisen die entsprechenden Filtermodule 10 entsprechende Filtratableitungen 30 auf, die in eine gemeinsame Abführleitung zusammengefasst werden, die dann beispielsweise zu dem Puffertank führt. Gemäß der vorliegenden Erfindung ist jedem Filtermodul 10 eine eigene Pumpeneinrichtung 6 in der Filtratableitung 30, sowie ein Drucksensor 9 zugeordnet. Erst in Filtratflussrichtung hinter den jeweiligen Pumpen 6 werden die Filtratströme der vier Module 10a, b, c, d zusammengefasst. Dies bringt den Vorteil mit sich, dass der Betrieb der Pumpe 6 (Drehzahl, Drehdauer, Pausenintervalle) an die Anforderungen des entsprechenden Filtermoduls 10a, b, c, d angepasst werden können.

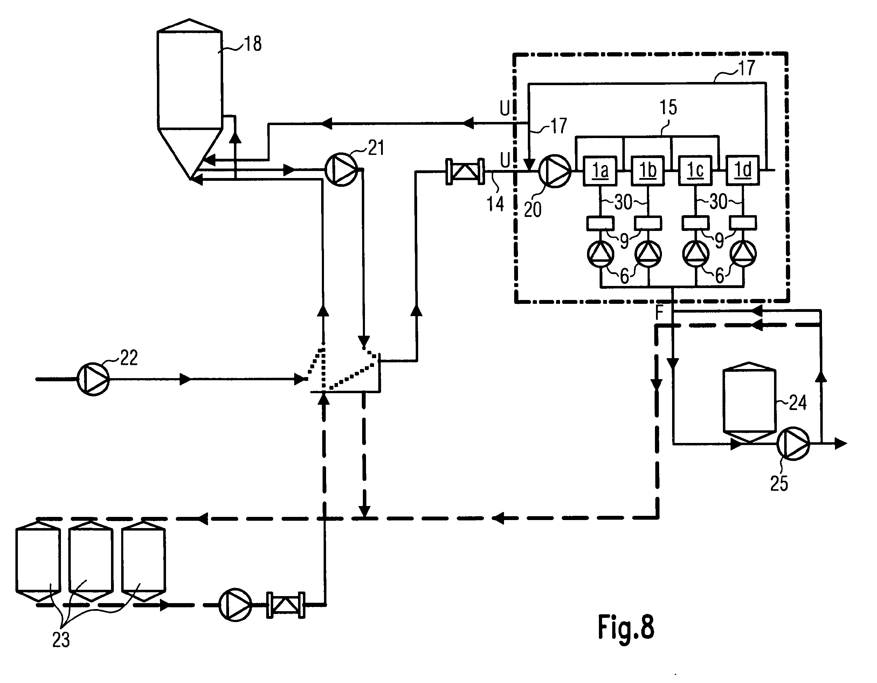

Fig. 8 zeigt die in Fig. 7 gezeigte Filtervorrichtung als Bierfilter. Das Unfiltrat, d.h. das Bier, wird einem Puffertank 18 über die Pumpe 22 direkt aus dem Gärkeller zugeführt. Über eine Unfiltratzuleitung 14 wird das ungefilterte Bier über eine Druckpumpe 21 ein entsprechendes Schaltungspaneel und gegebenenfalls einen Kühler aus dem Unfiltratpuffertank der Crossflow-Membranfilteranlage zugeführt. Die Pumpe 20 pumpt das Unfiltrat wie zuvor beschrieben in die in Reihe geschaltenen Filtermodule 10a, b, c, d sowie eventuell in die optional vorgesehene Bypassleitung 15. Hier ist deutlich zu erkennen, dass die Filtration über die Rückführleitung 17 im Kreislauf erfolgt, wobei das Unfiltrat aus dem letzten Filtermodul 10d in Flussrichtung vor der Pumpe 20 der Unfiltratzuführung 14 zugeführt werden kann, um erneut durch die Filtermodule gepumpt zu werden. Über die Rückführleitung 17 kann jedoch das Unfiltrat auch zunächst wieder in den Puffertank 18 geleitet werden, um dann später erneut der Crossflow-Membranfilteranlage zugeführt zu werden. Das Filtrat aus dem Filtratauslass 4 der einzelnen Module 10a, b, c, d läuft in die entsprechenden Filtratableitungen 30 über einen Drucksensor 9. Das heißt, dass für n Module n Pumpeneinrichtungen 6 vorgesehen sind. Die Pumpeneinrichtung 6 lässt dann zeitweise das Filtrat in Filtratflussrichtung ungehindert passieren, so dass es beispielsweise zu dem Puffertank 24 laufen kann oder aber pumpt es wie zuvor beschrieben entgegen der Filtratflussrichtung zurück in die Filtermodule 10a, b, c, d, derart, dass sich die Deckschicht auf der Innenseite der Kanäle 11 lösen kann oder aber erst gar nicht entsteht. Das abgezogene Filtrat kann dann weiter einem Drucktank im Lagerkeller zugeführt werden.

Die Module 10 a, b, c, d können auch jeweils als Moduleinheiten mit mehreren Modulen gebildet sein.

Zur Reinigung der Crossflow-Membranfilteranlage kann über entsprechende Reinigungstanks 23, hier Säure, Lauge und Heißwassertanks, heiße Reinigungsflüssigkeit durch die Leitungen und die Membranfilteranlage gespült werden. Die Filtermodule 1 können auch durch Rückspülen über den Filtratauslass 4 rückgespült werden.

## Patentansprüche

1. Filtervorrichtung mit einem Crossflow-Filtermodul, insbesondere zur Filtration von mit Proteinen, Polysacchariden und/oder Gärungsmikroorganismen, wie z. B. Hefe, beladenen Flüssigkeiten mit einem Gehäuse (7), das einen Unfiltratzulauf (2), einen Unfiltratablauf (3) sowie einen Filtratablauf (4) aufweist, wobei in dem Gehäuse (7) mindestens eine Crossflow-Membranfilterkerze (1) angeordnet ist, und das Filtrat (F) quer zum Unfiltratstrom durch die Membranfilterkerze abgezogen wird, **dadurch gekennzeichnet, dass** in einer Filtratableitung (30), die mit dem Filtratablauf (4) verbunden ist eine Pumpeneinrichtung (6) angeordnet ist, die derart ausgebildet ist, dass sie während der Filtration zeitweise Filtrat entgegen der Flussrichtung des Filtrats rückpumpt und zeitweise den Filtratfluss nicht blockiert.

2. Filtervorrichtung nach Anspruch 1, **dadurch gekennzeichnet, dass** in Ruhestellung der Pumpeneinrichtung (6) der Filtratfluss nicht blockiert wird.

3. Filtervorrichtung nach Anspruch 1 oder 2, **dadurch gekennzeichnet, dass** die Pumpeneinrichtung (6) eine Pumpe umfasst, deren Laufrichtung bzw. Förderrichtung der Flussrichtung des Filtrats entgegengesetzt ist.

4. Filtervorrichtung nach Anspruch 3, **dadurch gekennzeichnet, dass** die Pumpeneinrichtung eine Schlauchpumpe (6) umfasst und einen Schlauch (26) aufweist, und einen umlaufenden Gleitschuh (18), der bei seiner Rotation in einem ersten Winkelbereich β den Schlauch zusammendrückt und so das Unfiltrat entgegen der Flussrichtung fördert und in einem zweiten Winkelbereich α den Schlauch nicht zusammendrückt, so dass das Filtrat ungehindert durch die Schlauchpumpe in Filtratflussrichtung fließen kann.

5. Filtervorrichtung nach mindestens einem der Ansprüche 1 bis 5, **dadurch gekennzeichnet, dass** mehrere Crossflow-Filtermodule (10) bzw. Moduleinheiten hintereinander in Reihe angeordnet sind, wobei jedem Crossflow-Filtermodul bzw. jeder Moduleinheit eine Filtratableitung (30) und eine entsprechende Pumpeneinrichtung (6) zugeordnet ist.

6. Filtervorrichtung nach einem der Ansprüche 1 bis 5, **dadurch gekennzeichnet, dass** die Pumpeneinrichtung (6) zwischen dem Crossflow-Filtermodul und einem Pufferspeicher (24) für Filtrat angeordnet ist.

7. Verfahren zur Filtration insbesondere von mit Proteinen oder Polysacchariden beladenen Flüssigkeiten mit mindestens einer Crossflow-Membranfilterkerze (1), die mindestens einen Kanal (11) aufweist, durch den Unfiltrat (U) strömt, wobei Filtrat (F) quer zum Unfiltratstrom durch die Membranfilterkerze (1) abgezogen wird, **dadurch gekennzeichnet, dass** während der Filtration zeitweise das von der mindestens einen Crossflow-Membranfilterkerze (1) abgezogene Filtrat entgegen der Flussrichtung des Filtrats zurückgepumpt wird.

8. Verfahren nach Anspruch 7, **dadurch gekennzeichnet, dass** das Filtrat über eine Pumpeneinrichtung (6) zurückgepumpt wird, die während der Filtration teilweise Filtrat entgegen der Flussrichtung des Filtrats rückpumpt und zeitweise den Filtratfluss nicht blockiert.

9. Verfahren nach einem der Ansprüche 7 oder 8, **dadurch gekennzeichnet, dass** in Ruhestellung der Pumpeneinrichtung (6) das Filtrat unblockiert durch die Pumpenvorrichtung (6) abfließt.

10. Verfahren nach einem der Ansprüche 8 oder 9, **dadurch gekennzeichnet, dass** die Pumpeneinrichtung (6) eine Schlauchpumpe ist, die im Wesentlichen kontinuierlich bei geringer Drehzahl mit Pausenintervallen angetrieben wird.

11. Verfahren nach Anspruch 10, **dadurch gekennzeichnet, dass** die Schlauchpumpe kurzzeitig mit hoher Drehzahl arbeitet.

## Geänderte Patentansprüche

### Geänderte Patentansprüche gemäss Regel 86(2) EPÜ.

**1.** Filtervorrichtung mit einem Crossflow-Filtermodul, insbesondere zur Filtration von mit Proteinen, Polysacchariden und/oder Gärungsmikroorganismen, wie z. B. Hefe, beladenen Flüssigkeiten mit einem Gehäuse (7), das einen Unfiltratzulauf (2), einen Unfiltratablauf (3) sowie einen Filtratablauf (4) aufweist, wobei in dem Gehäuse (7) mindestens eine Crossflow-Membranfilterkerze (1) angeordnet ist, und das Filtrat (F) quer zum Unfiltratstrom durch die Membranfilterkerze abgezogen wird, **dadurch gekennzeichnet, dass** in einer Filtratableitung (30), die mit dem Filtratablauf (4) verbunden ist eine Pumpeneinrichtung (6) angeordnet ist, die derart ausgebildet ist, dass sie während der Filtration zeitweise Filtrat entgegen der Flussrichtung des Filtrats rückpumpt und zeitweise den Filtratfluss nicht blockiert, dass mehrere Crossflow-Filtermodule (10) bzw. Moduleinheiten hintereinander in Reihe angeordnet sind, wobei jedem Crossflow-Filtermodul bzw. jeder Moduleinheit eine Filtratableitung (30) und eine entsprechende Pumpeneinrichtung (6) zugeordnet ist, wobei die Pumpeinrichtung (6) eine Schlauchpumpe ist, die im Wesentlichen kontinuierlich bei geringer Drehzahl mit Pausenintervallen angetrieben ist.

**2.** Filtervorrichtung nach Anspruch 1, **dadurch gekennzeichnet, dass** in Ruhestellung der Pumpeneinrichtung (6) der Filtratfluss nicht blockiert wird.

**3.** Filtervorrichtung nach Anspruch 1 oder 2, **dadurch gekennzeichnet, dass** die Pumpeneinrichtung (6) eine Pumpe umfasst, deren Laufrichtung bzw. Förderrichtung der Flussrichtung des Filtrats entgegengesetzt ist.

**4.** Filtervorrichtung nach Anspruch 3, **dadurch gekennzeichnet, dass** die Pumpeneinrichtung eine Schlauchpumpe (6) umfasst und einen Schlauch (26) aufweist, und einen umlaufenden Gleitschuh (18), der bei seiner Rotation in einem ersten Winkelbereich β den Schlauch zusammendrückt und so das Unfiltrat entgegen der Flussrichtung fördert und in einem zweiten Winkelbereich α den Schlauch nicht zusammendrückt, so dass das Filtrat ungehindert durch die Schlauchpumpe in Filtratflussrichtung fließen kann.

**5.** Filtervorrichtung nach einem der Ansprüche 1 bis 4, **dadurch gekennzeichnet, dass** die Pumpeneinrichtung (6) zwischen dem Crossflow-Filtermodul und einem Pufferspeicher (24) für Filtrat angeordnet ist.

**6.** Verfahren zur Filtration insbesondere von mit Proteinen oder Polysacchariden beladenen Flüssigkeiten mit mindestens einer Crossflow-Membranfilterkerze (1), die mindestens einen Kanal (11) aufweist, durch den Unfiltrat (U) strömt, wobei Filtrat (F) quer zum Unfiltratstrom durch die Membranfilterkerze (1) abgezogen wird, **dadurch gekennzeichnet, dass** während der Filtration zeitweise das von der mindestens einen Crossflow-Membranfilterkerze (1) abgezogene Filtrat entgegen der Flussrichtung des Filtrats zurückgepumpt wird,
dass das Filtrat über eine Pumpeneinrichtung (6) zurückgepumpt wird, die während der Filtration teilweise Filtrat entgegen der Flussrichtung des Filtrats rückpumpt und zeitweise den Filtratfluss nicht blockiert,
dass die Pumpeneinrichtung (6) eine Schlauchpumpe ist, die im Wesentlichen kontinuierlich bei geringer Drehzahl mit Pausenintervallen angetrieben wird, wobei
mehrere Crossflow-Filtermodule (10) bzw. Moduleinheiten hintereinander in Reihe angeordnet sind, wobei jedem Crossflow-Filtermodul bzw. jeder Moduleinheit eine Filtratableitung (30) und eine entsprechende Pumpeneinrichtung (6) zugeordnet ist.

**7.** Verfahren nach Anspruch 6, **dadurch gekennzeichnet, dass** in Ruhestellung der Pumpeneinrichtung (6) das Filtrat unblockiert durch die Pumpenvorrichtung (6) abfließt.

**8.** Verfahren nach Anspruch 6, **dadurch gekennzeichnet, dass** die Schlauchpumpe kurzzeitig mit hoher Drehzahl arbeitet.
